# FASCICULE DE BREVET EUROPEEN

(11) **EP 1 820 681 B1**
(45) Date de publication et mention de la délivrance du brevet: **08.08.2012**
(21) Numéro de dépôt: 07290150.7
(22) Date de dépôt: 06.02.2007
(51) Int. Cl.: B60J 7/20

(54) **Dispositif de couverture de coffre comprenant une tablette articulée et véhicule automobile équipé d'un tel dispositif**
Abdeckanordnung für einen Verdeckkasten mit schwenkbarer Kraftfahrzeugheckplatte und Kraftfahrzeug mit einer solchen Vorrichtung
Cover arrangement for a storage compartment with a hinged parcel panel and vehicle equipped with such an arrangement

(30) Priorité: 17.02.2006 FR 0601417
(43) Date de publication de la demande: 22.08.2007
(73) Titulaire: HEULIEZ SAS, 79140 Cerizay (FR)
(72) Inventeur: Queveau, Paul, 79140 Montravers (FR); Guillez, Jean-Marc, 79140 Cirieres (FR); Queveau, Gérard, 79140 Le Pin (FR)
(74) Mandataire: Novagraaf Technologies

(56) Documents cités:
- EP-A- 1 369 277
- DE-A1- 10 039 683
- DE-A1- 10 162 153
- DE-C1- 4 445 941
- FR-A- 2 777 240

## Description

L'invention concerne un dispositif de couverture d'un coffre et un véhicule automobile du type cabriolet convertible équipé dudit dispositif de couverture de coffre.

Dans l'art antérieur, il est connu des véhicules du type cabriolet équipé d'un toit escamotable mobile entre une position de recouvrement de l'habitacle et une position escamotée dans le coffre du véhicule.

Afin de permettre le rangement des éléments de toit et l'accès au compartiment à bagages du coffre arrière, le couvercle de coffre possède deux sens d'ouverture. En effet, le couvercle s'ouvre de l'avant vers l'arrière pour permettre le rangement des éléments de toit et de l'arrière vers l'avant pour permettre l'accès au compartiment à bagages.

Généralement, les véhicules de ce type sont équipés d'une plage arrière qui est amovible afin de libérer un espace pour le rangement du toit.

Le document FR 2 777 240 prévoit notamment un couvercle de coffre et une tablette montée articulée sur le bord avant du couvercle de coffre entre une position de service dans laquelle la tablette forme une plage arrière lorsque le toit est en position escamotée et une position escamotée sous le couvercle lorsque le toit est en position de recouvrement.

Cependant, lors du déploiement du toit, le couvercle est ouvert de l'avant vers l'arrière et la tablette s'étend dans le prolongement du couvercle. Par conséquent, le débattement du couvercle doit être augmenté afin d'éviter des interférences entre le toit et la tablette lors du mouvement du toit.

Or, l'augmentation du débattement du toit entraîne une augmentation des risques d'interférences entre le couvercle de coffre et des personnes ou objets situés derrière le véhicule.

En outre, l'augmentation du débattement entraîne l'augmentation de la durée de l'ouverture ou de la fermeture du couvercle.

Enfin, afin de réaliser un débattement plus important, l'actionneur du couvercle de coffre, généralement un vérin, doit posséder une course plus importante. Par conséquent, l'actionneur est plus lourd et plus coûteux.

Le document EP 1 369 277 (état de la technique le plus proche) décrit un dispositif de couverture de coffre pour véhicule automobile équipe d'un toit escamotable dans le coffre du véhicule, ledit dispositif de couverture de coffre comportant :
- un couvercle lié à la caisse du véhicule de sorte à permettre son ouverture de l'arrière vers l'avant pour l'accès au coffre et de l'avant vers l'arrière pour le rangement du toit ; et
- une tablette montée articulée sur le couvercle par des moyens d'articulation agencés de sorte à permettre le mouvement de la tablette entre une position de service dans laquelle elle s'étend dans l'extension du couvercle et une position de débattement permettant de libérer un espace de rangement du toit lorsque le couvercle est ouvert pour le rangement du toit.

L'invention vise à remédier à ces problèmes en proposant un dispositif de couverture ou de fermeture de coffre ou de malle comprenant un couvercle et une tablette articulée sur ledit couvercle par des moyens d'articulation permettant de limiter le débattement du couvercle lors de son ouverture de l'avant vers l'arrière.

A cet effet, et selon un premier aspect, l'invention propose un dispositif de couverture de coffre selon la revendication 1.

Ainsi, le débattement du couvercle de coffre peut être diminué.

Ainsi, la tablette peut être disposée sous le couvercle afin de libérer un espace pour l'élément de toit arrière lorsque le toit est en position de recouvrement et/ou libérer l'espace de passage des éléments de toit.

Avantageusement, les moyens d'articulation sont agencés pour permettre le pivotement, autour d'au moins un axe sensiblement transversal, de la tablette par rapport au couvercle de coffre entre sa position de service et sa position de débattement.

Dans un premier mode de réalisation de l'invention, les moyens d'articulation comprennent au moins une charnière.

Dans un second mode de réalisation, les moyens d'articulation comprennent :
- au moins une biellette montée d'une part articulée sur ledit couvercle autour d'un premier axe C et d'autre part articulée sur la tablette autour d'un deuxième axe D ; et
- des moyens de guidage composés d'au moins une glissière solidaire du couvercle et d'un doigt solidaire de la tablette et mobile dans ladite glissière.

Ainsi, selon ce mode de réalisation, les moyens d'articulation permettent de guider la tablette selon des trajectoires complexes et permettent de minimiser l'espace affecté au déplacement de la tablette. En outre, les risques d'endommagement de la face supérieur de la tablette sont limités car la face supérieure de la tablette n'est jamais en vis-à-vis du compartiment à bagages.

Par ailleurs, on remarquera que selon ce mode de réalisation, l'espace utilisée par la tablette lors de son mouvement est diminué. Ainsi, le débattement du couvercle peut être diminué sans risquer des interférences entre le toit en position escamotée et la tablette.

Avantageusement, les moyens de guidage comprennent deux doigts solidaires de la tablette et mobiles dans deux glissières disposées de part et d'autre de ladite tablette et solidaires du couvercle.

Ainsi, l'équilibrage de la tablette est amélioré.

Selon un deuxième aspect, l'invention concerne un véhicule automobile équipé d'un dispositif de couverture de coffre selon l'invention.

Avantageusement, le toit comprend un élément de toit arrière possédant une paroi qui s'étend entre le bord avant du couvercle et l'extrémité avant du coffre lorsque le toit est en position de recouvrement.

Ainsi, la tablette peut être en position escamotée, lorsque le toit est en position de recouvrement.

D'autres objets et avantages de l'invention apparaîtront au cours de la description qui suit, faite en référence aux dessins annexés, dans lesquels :
- la figure 1 est une représentation schématique de l'arrière d'un véhicule automobile selon l'invention, le dispositif de couverture de coffre étant représenté en position fermée et en position ouverte de l'arrière vers l'avant alors que la tablette est en position escamotée ;
- la figure 2 est une représentation schématique de l'arrière d'un véhicule automobile selon l'invention, la tablette étant représentée en position de service lorsque le dispositif de couverture de coffre est en position fermée et en position de débattement lorsque le dispositif de couverture de coffre est ouvert de l'avant vers l'arrière ;
- La figure 3 une représentation schématique de trois quart arrière d'un dispositif de couverture de coffre selon un premier mode de réalisation de l'invention, la tablette étant dans sa position de service ;
- la figure 4 est une représentation schématique de trois quart arrière d'un dispositif de couverture de coffre selon un second mode de réalisation de l'invention, la tablette étant dans sa position de service ;
- la figure 5 est une représentation détaillée des moyens d'articulation de la tablette sur le couvercle de coffre selon le second mode de réalisation, la tablette étant représentée en traits pleins dans sa position escamotée et en traits mixtes dans sa position de service ; et
- la figure 6 est une représentation détaillée des moyens d'articulation de la tablette sur le couvercle de coffre selon le second mode de réalisation, la tablette étant représentée en traits pleins dans sa position de service et en traits mixtes dans sa position de débattement.

Dans la suite de la description, les termes « avant, arrière, devant, derrière » sont définis par rapport à un véhicule en cours d'utilisation. Par ailleurs, on notera que les termes « bord avant » et « bord arrière » de la tablette 7 sont définis par rapport à la tablette en position de service.

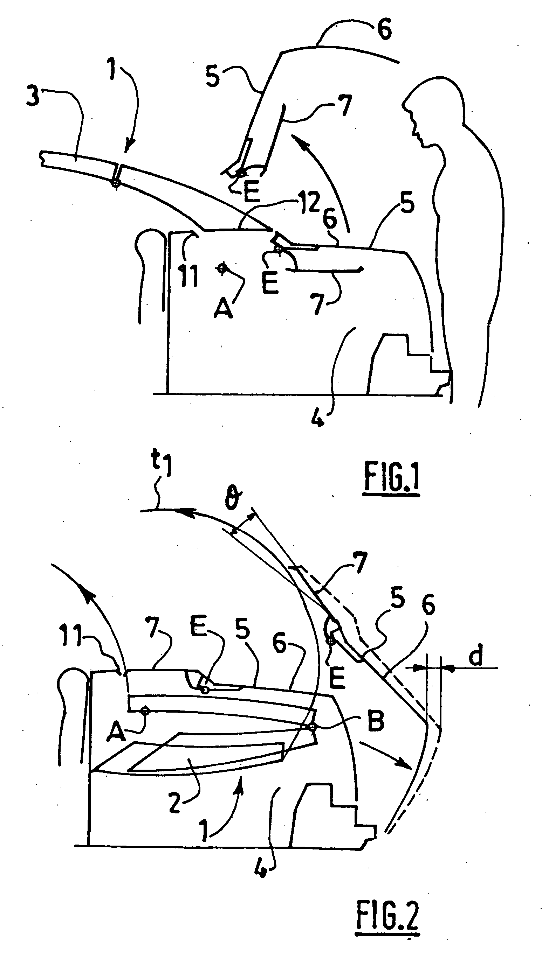

Le véhicule automobile, représenté sur les figures 1 et 2, est équipé d'un toit escamotable 1 mobile entre une position de recouvrement de l'habitacle du véhicule (figure 1) et une position escamotée dans le coffre arrière 4 du véhicule (figure 2).

Dans le mode de réalisation représenté, le toit escamotable 1 est équipé d'un élément de toit arrière 2 monté articulé sur la caisse du véhicule autour d'un premier axe A et d'un élément de toit avant 3 monté articulé sur l'élément de toit arrière 2 autour d'un second axe B. Ainsi, l'élément de toit avant 3 se replie sur l'élément de toit arrière 2 lorsque le toit 1 est dans sa position escamotée.

Dans un exemple de réalisation particulier, le toit 1 peut également comprendre des éléments latéraux 22 articulés sur l'élément de toit arrière 2

On remarquera cependant que l'invention ne se limite pas à un véhicule automobile équipé d'un tel toit 1 mais peut s'appliquer à tous les véhicules automobiles équipés d'un toit escamotable.

Afin de permettre le rangement du toit 1 et l'accès au coffre ou malle 4, le dispositif 5 de couverture de coffre 4 possède des moyens de liaison à la caisse du véhicule lui permettant de s'ouvrir selon deux sens opposés. Ainsi le dispositif 5 de couverture de coffre 4 peut s'ouvrir de l'avant vers l'arrière pour permettre le rangement des éléments 2, 3 de toit et de l'arrière vers l'avant pour accéder au compartiment à bagages ou au compartiment moteur du coffre arrière 4. Le pivotement du dispositif 5 de couverture de coffre 4 est entraîné par un actionneur tel qu'un vérin, non représenté.

Le dispositif 5 de couverture de coffre 4 selon l'invention comprend un couvercle de coffre 6 et une tablette 7 montée articulée sur le couvercle 6 par des moyens d'articulation permettant le mouvement de la tablette 7 entre différentes positions détaillées ci-dessous.

Dans le mode de réalisation représenté sur la figure 1, lorsque le toit 1 est en position de recouvrement, la tablette 7 est disposée dans sa position escamotée sous le couvercle 6 et n'exerce pas la fonction de plage arrière. Ainsi, lors du mouvement du toit 1 de sa position de recouvrement vers sa position escamotée, l'espace de passage du toit 1 est libéré. On notera que dans cette version, l'élément de toit arrière 2 possède, à proximité de son extrémité inférieure, une paroi 12 qui s'étend entre le bord avant du couvercle de coffre 6 et l'extrémité avant 11 du coffre 4 lorsque le toit 1 est dans sa position de recouvrement et forme ainsi une plage arrière.

On remarquera que, dans un autre mode de réalisation non représenté, lorsque le toit 1 est en position de recouvrement et le dispositif 5 de couverture est dans sa position fermée, la tablette 7 est dans sa position de service et s'étend alors sous l'élément de toit arrière 2 entre le bord avant du couvercle 6 et l'extrémité avant 11 du coffre 4. Cependant, dans ce mode de réalisation, lors du rangement du toit 1, la tablette 7 est préalablement disposée dans sa position escamotée.

Lorsque le toit 1 est dans sa position escamotée, la tablette 7 est dans sa position de service dans laquelle elle forme la plage arrière du véhicule, illustrée sur la figure 2. Lorsque la tablette 7 est dans sa position de service, elle s'étend dans le prolongement du couvercle 6. Ainsi, la tablette 7 s'étend entre le bord avant 5 du couvercle 6 et une extrémité avant 11 du coffre.

Lors du déploiement du toit 1 de sa position escamotée vers sa position de recouvrement, le dispositif 5 de couverture de coffre 4 s'ouvre de l'avant vers l'arrière et la tablette 7 est déplacée dans une position de débattement permettant de libérer l'espace de passage du toit.

Lorsque la tablette 7 est dans sa position de débattement, la tablette 7 est pivotée vers l'extérieur du coffre 4 par rapport à sa position de service. La tablette 7 forme alors un angle θ par rapport au couvercle 6. Ainsi, le bord avant de la tablette 7 est déplacé et relevé afin de libérer l'espace de passage du toit 1 lorsque ledit dispositif 5 de couverture de coffre 4 est ouvert de l'avant vers l'arrière.

Sur la figure 2, on représente la trajectoire t1 d'un point extrême du toit 1 lors du mouvement du toit 1 entre sa position escamotée et sa position de recouvrement. Par ailleurs, la position théorique d'ouverture d'un dispositif 5 de couverture de coffre 4 ne possédant pas de tablette mobile dans une position de débattement est représentée en traits pointillés. Ainsi, on remarque que la position de débattement de la tablette 7 permet de diminuer le débattement d'une distance d du dispositif 5 de couverture de coffre 4 lors de son ouverture de l'avant vers l'arrière. De cette façon, on réduit les risques d'interférences avec des objets ou des personnes.

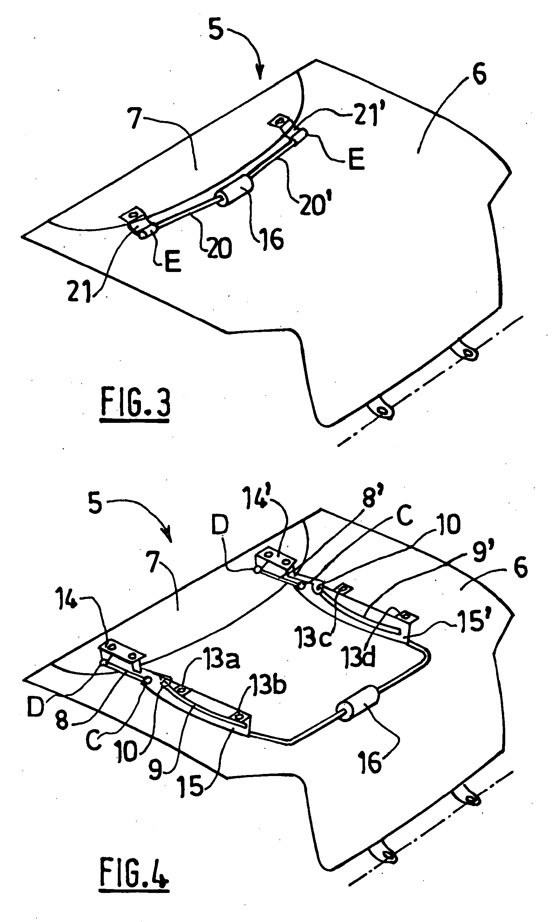

La figure 3 représente de façon détaillée les moyens d'articulation de la tablette 7 sur le couvercle 6 selon un premier mode de réalisation de l'invention. Dans ce mode de réalisation, les moyens d'articulation sont composés de deux charnière 21, 21' permettant à la tablette 7 de pivoter par rapport au couvercle 6 autour de l'axe E.

Le pivotement de la tablette 7 peut être commandé par un moteur électrique 16 accouplé à deux arbres 20, 20' reliés à l'axe de rotation E, sensiblement transversal au véhicule, des charnières 21, 21'.

Les figures 4, 5 et 6 représentent de façon détaillée les moyens d'articulation de la tablette 7 sur le couvercle ou capot 6 selon le second mode de réalisation de l'invention.

Les moyens d'articulation sont composés d'au moins une biellette 8, 8' montée d'une part en rotation selon l'axe C, sensiblement transversal, sur ledit couvercle 6 et d'autre part en rotation selon l'axe D, sensiblement transversal, sur la tablette 7. Dans le mode de réalisation représenté, les moyens d'articulation comprennent deux biellettes 8, 8' parallèles.

Les moyens d'articulation comprennent en outre des moyens de guidage composés d'au moins une glissière 9, 9' solidaire du couvercle 6 et d'un doigt 10, 10' solidaire de la tablette 7 et mobile dans ladite glissière 9, 9'. Avantageusement, afin d'éviter un mauvais équilibrage de la tablette, les moyens d'articulation comprennent deux doigts 10, 10' solidaires de la tablette 7 et mobiles dans deux glissières 10, 10' disposées de part et d'autre de ladite tablette 7.

Dans le mode de réalisation représenté, les glissières 9, 9' sont formées dans des pièces de guidage 15, 15' fixées au couvercle 6 au moyen de pattes de fixation 13a, 13b, 13c, 13d.

Par ailleurs, dans le mode de réalisation représenté, les moyens d'articulation sont liés à la tablette 7 au moyen de deux pattes de liaison 14, 14' disposées de part et d'autre de la tablette 7. Avantageusement, le doigt de guidage 10, 10' est disposé à proximité de l'extrémité inférieure arrière de la patte de liaison 14, 14' et l'articulation de la biellette 8, 8'sur la patte de liaison est disposée à proximité de l'extrémité avant inférieure de ladite patte de liaison 14, 14'.

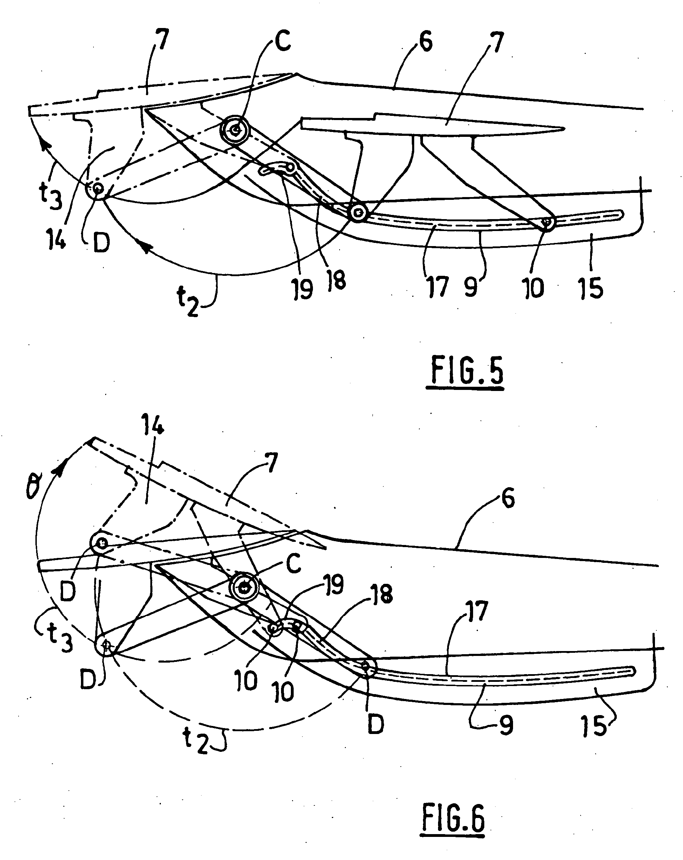

Dans un mode de réalisation représenté sur les figures 5 et 6, les moyens d'articulation sont liés à la tablette au moyen de quatre pattes de liaison 14, 14'.

Le mouvement de la tablette 7 peut être entraîné par tout actionneur approprié. L'actionneur peut notamment être un vérin monté d'une part articulé sur le couvercle 6 ou sur les pièces de guidage 15, 15' et d'autre part articulé sur la tablette 7, sur une biellette 8, 8' ou sur les pattes de liaison 14, 14'. L'actionneur peut également être un moteur 16, représenté sur la figure 3, fixé au couvercle 6 et entraînant des câbles de traction-poussée dont une extrémité est solidaire de la tablette 7 au niveau des doigts de guidage 10, 10' ou des biellettes 8, 8', au niveau de leur axe D de rotation sur le couvercle 6. Dans un autre mode de réalisation, l'actionneur peut également être un moteur entraînant la rotation des biellettes 8, 8' autour de l'axe C, un dispositif de transmission tel que des câbles filetées permettant de transmettre le mouvement de l'arbre moteur à la biellette 8, 8'.

Sur les figures 5 et 6, les courbes t2 et t3 illustrent respectivement la trajectoire de déplacement de l'axe D d'articulation de la biellette 8, 8' sur la patte de liaison 14, 14' et la trajectoire de déplacement du bord avant de la tablette.

La forme de la glissière 9, 9' peut être divisée en trois parties curvilignes distinctes. Dans une première partie 17, la glissière 9, 9' possède une pente P1, par rapport à l'horizontal, sensiblement nulle. Dans une seconde partie 18, la pente P2 est supérieure à la pente P1 alors que dans une troisième partie 19, la pente P3 est de signe opposé à la pente P2.

Lors du mouvement de la tablette 7 de sa position escamotée vers sa position de service (cf. figure 5), le bord avant de la tablette 7 commence par descendre en raison du mouvement de rotation des biellettes 8, 8' autour de l'axe C ce qui permet de contourner le bord avant du couvercle 6, alors que le doigt 10, 10' est mobile dans la première partie 17 de la glissière 9, 9'. Lorsque le doigt 10, 10' se déplace dans la seconde partie 18 de la glissière 9, 9', la pente ascendante de ladite seconde partie 18 entraîne la remontée de l'arrière de la tablette 7 au niveau du bord avant du couvercle 6.

Lors du mouvement de la tablette 7 de sa position de service vers sa position de débattement (cf. figure 6), la tablette 7 pivote de l'avant vers l'arrière en raison du mouvement de rotation de la biellette 8, 8' autour de l'axe C et le mouvement du doigt de guidage 10, 10' dans la troisième partie 19 de la glissière entraîne la rotation de la tablette 7 autour de l'axe D. Ainsi, le bord arrière de la tablette 7 se dégage du bord avant du couvercle 6 et la biellette 8, 8' provoque la remontée du bord avant de la tablette 7.

Avantageusement l'ensemble formé par la tablette 7, les pattes de liaison 14, 14', les pièces de guidage 15, 15' et l'actionneur peut être pré-assemble sous forme de module qui sera ensuite monté sur le couvercle 6.

## Revendications

1. Dispositif (5) de couverture de coffre (4) pour véhicule automobile équipé d'un toit (1) mobile entre une position de recouvrement de l'habitacle du véhicule et une position escamotée dans le coffre (4), ledit dispositif (5) comprenant :
- un couvercle (6),
- une tablette (7) montée articulée sur ledit couvercle (6) par des moyens d'articulation, et
- des moyens de liaison à la caisse du véhicule permettant l'ouverture du couvercle (6) et de la tablette (7) pour le rangement du toit (1) et l'ouverture du couvercle (6) et de la tablette (7) pour l'accès au coffre (4),
- ledit dispositif étant **caractérisé en ce que** les moyens d'articulation sont agencés pour permettre le déplacement de la tablette entre :
- une position de service dans laquelle la tablette (7) s'étend en extension à partir du bord avant du couvercle (6) et
- une position de débattement dans laquelle le bord avant de la tablette (7) est déplacé par rapport au couvercle (6) vers l'extérieur du coffre (4), par rapport à sa position de service, afin de libérer l'espace de passage du toit (1) lorsque ledit couvercle (5) est ouvert; et
- une position escamotée dans laquelle la tablette (7) s'étend sous le couvercle (6).

2. Dispositif (5) de couverture de coffre selon la revendication 1, **caractérisé en ce que** dans la position de débattement de la tablette (7), le bord avant de la tablette (7) est pivoté vers l'extérieur par rapport au couvercle (6).

3. Dispositif (5) de couverture de coffre (4) selon la revendication 1 ou 2, **caractérisé en ce que** les moyens d'articulation sont agencés pour permettre le pivotement, autour d'au moins un axe sensiblement transversal, de la tablette (7) par rapport au couvercle (6) entre sa position de service et sa position de débattement.

4. Dispositif (5) de couverture de coffre (4) selon l'une des revendications 1 à 3 **caractérisé en ce que** les moyens d'articulation comprennent :
- au moins une biellette (8, 8') montée d'une part articulée sur le couvercle (6) autour d'un premier axe C et d'autre part articulée sur la tablette (7) autour d'un deuxième axe D ; et
- des moyens de guidage composés d'au moins une glissière (9, 9') solidaire du couvercle (6) et d'un doigt (10, 10') solidaire de la tablette (7) et mobile dans ladite glissière (9, 9').

5. Dispositif (5) de couverture de coffre (4) selon la revendication 4, **caractérisé en ce que** les moyens de guidage comprennent deux doigts (10, 10') solidaires de la tablette (7) et mobiles dans deux glissières (9, 9') disposées de part et d'autre de ladite tablette (7) et solidaires du couvercle (6).

6. Dispositif (5) de couverture de coffre (4) selon la revendication 4 ou 5, **caractérisé en ce que** la glissière (9, 9') est composé de trois parties (17, 18, 19) consécutives de pentes différentes, une première partie (17) possédant une pente P1, une seconde partie (18) possédant une pente P2 supérieure à P1 et une troisième partie (19) possédant une pente de signe opposé à P2.

7. Dispositif (5) de couverture de coffre (4) selon l'une des revendications 4 à 6, **caractérisé en ce que** le deuxième axe D est disposé devant le doigt de guidage (10, 10').

8. Dispositif (5) de couverture de coffre (4) selon l'une des revendications 4 à 7, **caractérisé en ce qu'**il comprend un actionneur permettant d'entraîner le mouvement de la tablette (7).

9. Dispositif (5) de couverture de coffre (4) selon la revendication 8, **caractérisé en ce que** l'actionneur est un vérin monté d'une part articulée sur le couvercle (6) et d'autre part articulée sur la tablette (7) ou sur la biellette (8, 8').

10. Dispositif (5) de couverture de coffre (4) selon la revendication 8, **caractérisé en ce que** l'actionneur est un moteur actionnant des câbles de traction pousée dont une extrémité est solidaire de la tablette (7) ou des biellettes (8, 8').

11. Véhicule automobile **caractérisé en ce qu'**il est équipé d'un dispositif (5) de couverture de coffre (4) selon l'une des revendications 1 à 10.

12. Véhicule automobile selon la revendication 11, **caractérisé en ce que** le toit (1) comprend un élément de toit arrière (2) possédant une paroi (12) qui s'étend entre le bord avant du couvercle (6) et l'extrémité avant (11) du coffre (4) lorsque le toit (1) est en position de recouvrement.

## Claims

1. Device (5) for covering the boot (4) for a motor vehicle fitted with a roof (1) which moves between a position covering the passenger compartment of the vehicle and a retracted position in the boot (4), said device (5) comprising:
- a cover (6),
- a pivoting shelf (7) mounted on said cover (6) by hinging means, and
- means of connection to the body of the vehicle enabling the opening of the cover (6) and the shelf (7) for the stowing away of the roof (1) and the opening of the cover (6) and the shelf (7) for access to the boot (4),
- said arrangement being **characterised in that** the hinging means are arranged to enable the moving of the shelf between:
- a operating position in which the shelf (7) extends by extending from the leading edge of the cover (6) and
- a displacement position in which the leading edge of the shelf (7) is moved relative to the cover (6) towards the exterior of the boot (4), relative to its operating position, in order to create space for the passage of the roof (1) when said cover (5) is open; and
- a retracted position in which the shelf (7) extends beneath the cover (6).

2. Device (5) for covering a boot according to claim 1, **characterised in that** the displacement position of the shelf (7), the leading edge of the shelf (7) is pivoted towards the exterior relative to the cover (6).

3. Device (5) for covering a boot (4) according to claim 1 or 2, **characterised in that** the hinging means are arranged to enable the pivoting, around at least one substantially transverse axis, of the shelf (7) relative to the cover (6) between its operating position and its displacement position.

4. Device (5) for covering a boot (4) according to one of claims 1 to 3 **characterised in that** the hinging means comprise:
- at least one rod (8, 8') mounted by one hinged part on the cover (6) around a first C axis and by another hinged part on the shelf (7) around a second D axis; and
- guiding means composed of at least one guide rail (9, 9') integral with the cover (6) and of one finger (10, 10') integral with the shelf (7) and mobile in said guide rail (9' 9').

5. Device (5) for covering a boot (4) according to claim 4, **characterised in that** the guiding means comprise two fingers (10, 10') integral with the shelf (7) and mobile in two guide rails (9, 9') arranged on each side of said shelf (7) and integral with the cover (6).

6. Device (5) for covering a boot (4) according to claim 4 or 5, **characterised in that** the guide rail (9, 9') is composed of three consecutive parts (17, 18, 19) of different gradients, the first part (17) having a gradient P1, the second part (18) having a gradient P2 greater than P1 and the third part (19) having a gradient in an opposite direction to P2.

7. Device (5) for covering a boot (4) according to one of claims 4 to 6, **characterised in that** the second D axis is arranged in front of the guide finger (10, 10').

8. Device (5) for covering a boot (4) according to one of claims 4 to 7, **characterised in that** it comprises an actuator allowing the movement of the shelf (7) to be set into motion.

9. Device (5) for covering a boot (4) according to claim 8, **characterised in that** the actuator is a jack mounted by one hinged part on the cover (6) and on another hinged part on the shelf (7) or on the rod (8, 8').

10. Device (5) for covering a boot (4) according to claim 8, **characterised in that** the actuator is a motor actuating push pull cables of which one end is integral with the shelf (7) or the rods (8, 8').

11. Motor vehicle **characterised in that** it is equipped with a device (5) for covering a boot (4) according to one of claims 1 to 10.

12. Motor vehicle according to claim 11, **characterised in that** the roof (1) comprises a rear roof element (2) having a wall (12) which extends between the leading edge of the cover (6) and the front end (11) of the boot (4) when the roof (1) is in its covering position.

## Patentansprüche

1. Vorrichtung (5) zur Abdeckung des Kofferraums (4) für ein mit einem Dach (1) ausgestattetes Kraftfahrzeug, das zwischen einer Position, in der es den Innenraum des Fahrzeugs abdeckt, und einer Verstauposition im Kofferraum (4) bewegbar ist, wobei die Vorrichtung (5) Folgendes umfasst:
- eine Abdeckung (6),
- eine mit Hilfe von Gelenken gelenkig an der Abdeckung (6) angebrachte Kraftfahrzeugheckplatte (7), und
- Verbindungsmittel zur Fahrzeugkarosserie, die die Öffnung der Abdeckung (6) und der Kraftfahrzeugheckplatte (7) ermöglichen, um das Dach zu verstauen und um die Abdeckung (6) und die Kraftfahrzeugheckplatte (7) für den Zugang zum Kofferraum (4) zu öffnen,
- wobei die Vorrichtung **dadurch gekennzeichnet ist, dass** die Gelenke derart angebracht sind, um ein Verschieben der Kraftfahrzeugheckplatte (7) zu ermöglichen zwischen:
- einer Betriebsposition, in der die Kraftfahrzeugheckplatte (7) sich von der vorderen Kante der Abdeckung (6) aus erstreckt und
- einer Schwenkposition, in welcher die vordere Kante der Kraftfahrzeugheckplatte (7) im Bezug auf die Abdeckung in Richtung der Außenseite des Kofferraums im Bezug zur Betriebsposition verschoben ist, um Platz für den Durchgang des Daches (1) frei zu machen, wenn die Abdeckung (5) geöffnet ist; und
- einer eingefahrenen Position, in welcher die Kraftfahrzeugheckplatte (7) sich unter der Abdeckung (6) erstreckt.

2. Vorrichtung (5) zur Abdeckung des Kofferraums nach Anspruch 1, **dadurch gekennzeichnet, dass** in der Schwenkposition der Kraftfahrzeugheckplatte (7) die vordere Kante der Kraftfahrzeugheckplatte (7) nach außen geschwenkt wird im Bezug auf die Abdeckung (6).

3. Vorrichtung (5) zur Abdeckung des Kofferraums (4) nach Anspruch 1 oder 2, **dadurch gekennzeichnet, dass** die Anbringung der Gelenkmittel das Schwenken der Kraftfahrzeugheckplatte (7) im Bezug zur Abdeckung (6) zwischen ihrer Betriebsposition und ihrer Schwenkposition um mindestens eine im Wesentlichen quere Achse ermöglicht.

4. Vorrichtung (5) zur Abdeckung des Kofferraums (4) nach einem beliebigen der Ansprüche 1 bis 3, **dadurch gekennzeichnet, dass** die Gelenkmittel Folgende umfassen:
- zumindest eine zum einen an der Abdeckung (6) gelenkig um eine erste Achse C und zum anderen gelenkig an der Kraftfahrzeugheckplatte (7) um eine zweite Achse D angebrachte Stange (8, 8'); und
- Führungsmittel bestehend aus mindestens einer mit der Abdeckung (6) fest verbundenen Schiene (9, 9') und einem mit der Kraftfahrzeugheckplatte (7) fest verbundenen und in der Schiene (9' 9') beweglichen Stift (10, 10').

5. Vorrichtung (5) zur Abdeckung des Kofferraums (4) nach Anspruch 4, **dadurch gekennzeichnet, dass** die Führungsmittel zwei mit der Kraftfahrzeugheckplatte (7) fest verbundene und in den zwei Schienen (9, 9') bewegliche Stifte umfassen (10, 10'), die beidseitig an der Kraftfahrzeugheckplatte (7) angebracht und mit der Abdeckung (6) fest verbunden sind.

6. Vorrichtung (5) zur Abdeckung des Kofferraums (4) nach Anspruch 4 oder 5, **dadurch gekennzeichnet, dass** die Schiene (9, 9') aus drei aufeinander folgenden Teilen (17, 18, 19) mit unterschiedlicher Neigung besteht, wobei ein erstes Teil (17) einen Neigung P1 aufweist, ein zweites Teil (18), das eine Neigung P2 aufweist, die größer als P1 ist, und ein drittes Teil (19), das eine Neigung mit dem umgekehrten Vorzeichen zu P2 aufweist.

7. Vorrichtung (5) zur Abdeckung des Kofferraums (4) nach einem beliebigen der Ansprüche 4 bis 6, **dadurch gekennzeichnet, dass** die zweite Achse D vor dem Führungsstift (10, 10') angeordnet ist.

8. Vorrichtung (5) zur Abdeckung des Kofferraums (4) nach einem beliebigen der Ansprüche 4 bis 7, **dadurch gekennzeichnet, dass** sie einen Stellantrieb umfasst, durch den die Kraftfahrzeugheckplatte (7) beweglich angetrieben werden kann.

9. Vorrichtung (5) zur Abdeckung des Kofferraums (4) nach Anspruch 8, **dadurch gekennzeichnet, dass** der Stellantrieb ein zum einen gelenkig an der Abdeckung (6) zum anderen gelenkig an der Kraftfahrzeugheckplatte (7) oder an der Stange (8,8') angebrachter Zylinder ist.

10. Vorrichtung (5) zur Abdeckung des Kofferraums (4) nach Anspruch 8, **dadurch gekennzeichnet, dass** der Stellantrieb ein Motor ist, der Schub-Zugseile antreibt, von denen ein Ende mit der Kraftfahrzeugheckplatte (7) oder den Stangen (8, 8') fest verbunden ist.

11. Kraftfahrzeug, **dadurch gekennzeichnet, dass** es mit einer Vorrichtung (5) zur Abdeckung des Kofferraums (4) nach einem beliebigen der Ansprüche 1 bis 10 ausgestattet ist.

12. Kraftfahrzeug nach Anspruch 11, **dadurch gekennzeichnet, dass** das Dach (1) ein hinteres Dachelement (2) mit einer Wand (12) umfasst, die sich zwischen der vorderen Kante der Abdeckung (6) und dem vorderen Ende (11) des Kofferraums (4) erstreckt, wenn das Dach (1) in der Abdeckposition ist.
